# FASCICULE DE BREVET EUROPEEN

(11) **EP 0 695 246 B1**
(45) Date de publication et mention de la délivrance du brevet: **30.07.1997**
(21) Numéro de dépôt: 95910589.1
(22) Date de dépôt: 23.02.1995
(51) Int. Cl.: B60S 1/38

(54) **BALAI D'ESSUIE-GLACE COMPORTANT DES MOYENS PERFECTIONNES D'IMMOBILISATION LONGITUDINALE DE LA VERTEBRE DE RENFORT**
SCHEIBENWISCHERBLATT MIT VERBESSERTEM MITTEL ZUM FIXIEREN DER VERSTEIFUNGSLEISTE IN LÄNGSRICHTUNG
WIPER BLADE COMPRISING AN IMPROVED SYSTEM FOR LONGITUDINALLY LOCKING A REINFORCING ROD

(30) Priorité: 01.03.1994 FR 9402430
(43) Date de publication de la demande: 07.02.1996
(73) Titulaire: VALEO SYSTEMES D'ESSUYAGE, 78321 La Verrière (FR)
(72) Inventeur: MEGE, Bernard, F-63000 Clermont-Ferrand (FR); SORTAIS, Jean-Luc, F-63110 Beaumont (FR)
(74) Mandataire: Gamonal, Didier
(86) Numéro de dépôt international: FR9500214
(87) Numéro de publication internationale: WO9523714

(56) Documents cités:
- EP-A- 0 461 987
- WO-A-93/14958
- FR-A- 2 502 086

## Description

La présente invention concerne un balai d'essuie-glace, notamment de véhicule automobile.

L'invention concerne plus particulièrement un balai d'essuie-glace comportant une raclette d'essuyage dont un talon longitudinal supérieur de liaison est relié à un composant d'une structure de support de la raclette d'essuyage, tel que par exemple un palonnier d'une structure articulée de support, gui comporte un anneau ouvert de liaison, également appelé griffe de liaison, sensiblement en forme de U inversé gui chevauche le talon et dont chacune des branches verticales se prolonge par une patte transversale gui est reçue sous une face horizontale inférieure du talon, et du type dans lequel le talon comporte au moins une rainure longitudinale formée dans une face latérale verticale du talon et qui reçoit une vertèbre de renfort réalisée sous la forme d'une plaque horizontale de renfort dont un bord latéral extérieur comporte une encoche de verrouillage prévue pour recevoir un organe de verrouillage en position longitudinale du composant de la structure de support par rapport à la vertèbre.

Un exemple d'une telle conception d'un balai d'essuie-glace est décrit et représenté dans le document FR-A-2.502.086 dans lequel l'encoche de verrouillage formée dans le bord latéral de la vertèbre est délimitée par deux pattes de butée réalisées par découpage et qui font saillie transversalement vers l'extérieur par rapport au plan général du bord longitudinal extérieur de la vertèbre.

Outre la complexité de la découpe à réaliser dans la vertèbre et la nécessité de déformer les pattes de butée vers l'extérieur après avoir réalisé la découpe, cette conception a pour inconvénient d'imposer de déformer élastiquement les branches verticales de la griffe de liaison légèrement en écartement l'une de l'autre lors de l'introduction par coulissement longitudinal du talon dans la griffe jusqu'à ce que la branche verticale franchisse la rampe constituée par la première patte de retenue qu'elle rencontre pour venir s'emboîter ensuite élastiquement dans l'encoche. Ce phénomène de déformation de la griffe est accru dans le cas où la raclette d'essuyage présente une conception symétrique par rapport à un plan vertical médian, les deux vertèbres présentant des encoches de verrouillage agencées longitudinalement en regard l'une de l'autre.

Par ailleurs, la conception décrite dans ce document rend le démontage de la raclette d'essuyage, en vue de son remplacement, particulièrement difficile dans la mesure où l'opérateur doit comprimer transversalement vers l'intérieur les pattes de retenue pour permettre à nouveau l'extraction longitudinale de la raclette d'essuyage par coulissement du talon supérieur entre les branches verticales de la griffe de liaison.

On connaît également du document FR-A-2.215.048 une conception d'un balai d'essuie-glace dans laquelle les encoches de verrouillage formées dans les vertèbres longitudinales de renfort sont de forme très simple et ne comportent aucune patte de retenue en saillie transversale et déformable élastiquement.

Dans cette conception, l'immobilisation longitudinale de la vertèbre par rapport au talon est assurée au moyen d'un cavalier intermédiaire qui est mis en place verticalement sur le talon et qui nécessite d'effectuer dans le matériau constitutif du corps du talon des découpes ou des entailles en regard des encoches de verrouillage formées dans le bord latéral extérieur de la vertèbre de renfort. De plus, la mise en place de la griffe en forme d'anneau ouvert du palonnier de liaison s'effectue toujours en franchissant des pattes déformables élastiquement agencées sur le cavalier intermédiaire de verrouillage, la conception de ce dernier étant particulièrement complexe et les opérations de démontage étant à nouveau rendues difficiles du fait de la nécessité de déformer élastiquement les pattes de verrouillage formées à l'extérieur du cavalier de verrouillage.

La présente invention a pour but de proposer une nouvelle conception d'un balai d'essuie-glace dont les moyens d'immobilisation longitudinale relative de la griffe de liaison par rapport aux vertèbres de renfort permettent de remédier aux inconvénients qui viennent d'être mentionnés.

Dans ce but, l'invention propose un balai d'essuie-glace du type mentionné précédemment, caractérisé en ce que la branche verticale de l'anneau de liaison comporte un logement qui est ouvert en direction du bord latéral extérieur de la vertèbre et qui reçoit un doigt vertical de l'organe de verrouillage qui fait en partie saillie transversalement dans l'ouverture du logement pour être reçu dans l'encoche de verrouillage de la vertèbre.

Selon des caractéristiques ayant trait au mode de réalisation de l'invention :
- le talon supérieur de liaison est réalisé en matériau déformable élastiquement et le bord latéral extérieur de la vertèbre affleure la face latérale verticale du talon ;
- le doigt de verrouillage constitue l'une des deux branches verticales d'un cavalier de verrouillage en forme de U inversé qui chevauche le corps de l'anneau de liaison ;
- le talon supérieur de liaison comporte deux vertèbres de renfort agencées symétriquement par rapport à un plan vertical médian de symétrie de la raclette d'essuyage et dont chacune comporte une encoche de verrouillage ;
- les encoches de verrouillage des deux vertèbres de renfort sont agencées longitudinalement en vis-à-vis l'une de l'autre, l'anneau de liaison présente une symétrie de conception par rapport à un plan longitudinal médian, et chacune des deux branches verticales du cavalier de verrouillage est reçue dans un logement ouvert formé dans l'une des deux branches verticales de l'anneau de liaison ;
- chacune des branches verticales du cavalier de verrouillage se prolonge par une patte transversale qui est reçue sous la patte transversale de la branche verticale correspondante de l'anneau de liaison ;
- chaque logement ouvert formé dans une branche verticale de l'anneau de liaison est délimité longitudinalement par deux nervures verticales externes ;
- le cavalier de verrouillage est déformable élastiquement pour permettre sa mise en place sur l'anneau de liaison par écartement de ces branches verticales ;
- la face latérale verticale du talon supérieur de liaison comporte un cran agencé en regard de l'encoche de verrouillage de la vertèbre de renfort dans lequel est reçue ladite partie du doigt de verrouillage qui est reçue dans l'encoche de verrouillage.

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective partiellement éclatée d'un tronçon d'une raclette d'essuyage réalisée conformément aux enseignements de la technique ;
- la figure 2 est une vue similaire à celle de la figure 1 illustrant la raclette d'essuyage en position montée et immobilisée longitudinalement dans une griffe d'extrémité d'un palonnier de liaison d'une structure articulée de support appartenant à un balai d'essuie-glace ;
- la figure 3 est une vue en perspective éclatée similaire à celle des figures 1 et 2 qui illustre les principaux composants d'un balai d'essuie-glace réalisé conformément aux enseignements de l'invention ;
- la figure 4 est une vue en section par un plan vertical passant par un plan médian du cavalier et de verrouillage illustré à la figure 3, sur laquelle les différents composants sont illustrés en position montée;
- la figure 5 est une vue schématique de détail en perspective illustrant la coopération d'une branche verticale du cavalier de verrouillage reçue dans une encoche de verrouillage d'une vertèbre de renfort ; et
- la figure 6 est une vue schématique en section transversale similaire à celle de la figure 4 illustrant la mise en place du cavalier de verrouillage par déformation élastique de ses branches.

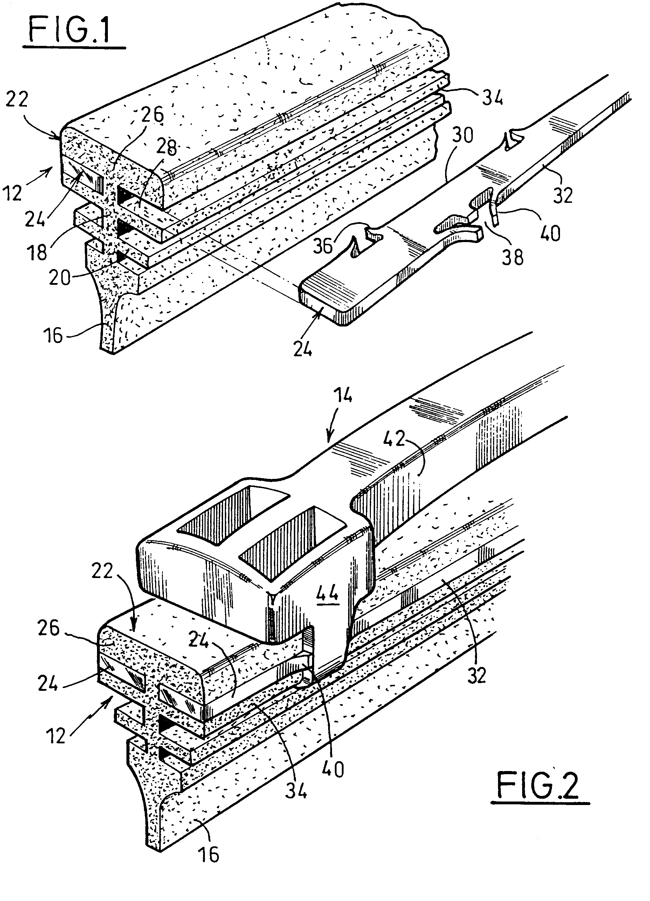

On reconnaît sur les figures 1 et 2 une partie d'un balai d'essuie-glace qui est pour l'essentiel constitué par une raclette d'essuyage 12 et par un palonnier secondaire 14 appartenant à une structure articulée de support de la raclette d'essuyage 12.

La raclette 12 comporte une lame d'essuyage 16 qui est prévue pour coopérer, en usage normal, avec la vitre à essuyer et qui est reliée par une âme 18 et par des ailes 20 à un talon de liaison 22 renforcé par deux vertèbres métalliques de renfort 24.

A l'exception des vertèbres 24, l'ensemble de la raclette 12 est réalisé sous la forme d'un profilé en caoutchouc ou en matière élastomère.

Le talon supérieur longitudinal de liaison 22 présente, en section transversale, sensiblement la forme d'un rectangle et son corps massif en matériau élastomère 26 comporte deux rainures longitudinales horizontales et opposées 28 qui sont agencées symétriquement par rapport au plan vertical médian de symétrie de la raclette d'essuyage 12.

Les dimensions de chacune des rainures longitudinales 28 du talon 12 sont telles que lorsque la vertèbre 24 est en place dans une rainure 28, son bord latéral intérieur 30 est en appui contre le fond de la rainure 28 et son bord latéral extérieur 32 affleure la face latérale verticale 34 du corps 22 du talon 12.

Selon une conception connue de l'état de la technique, décrite et représentée dans le document FR-A-2 502 086, le bord latéral intérieur 30 de chaque vertèbre 24 comporte des dents 36 d'accrochage de la vertèbre dans la bande médiane de liaison 18 et le bord latéral extérieur 32 de chaque vertèbre comporte une encoche 38, qui est découpée dans la vertèbre en forme de plaque métallique 24 et qui délimite deux pattes d'immobilisation 40 qui font saillie transversalement vers l'extérieur par rapport au plan commun au bord latéral extérieur 32 et à la face latérale verticale 34.

Dans cette conception selon l'état de la technique, la branche longitudinale principale 42 du pontet 14 se termine par une extrémité 44, également appelée griffe, en forme d'anneau ouvert verticalement vers le bas qui présente en section transversale la forme d'un U inversé et dont chacune des branches latérales verticales 46 présente une largeur telle qu'elle puisse être reçue dans une encoche d'immobilisation correspondante 38 formée dans une vertèbre 24.

Comme cela a été expliqué précédemment, la mise en place de la raclette 12 s'effectue en introduisant par coulissement longitudinal le talon supérieur de liaison 12 entre les branches verticales 46 de la griffe 44 jusqu'à ce que ces dernières pénètrent, après déformation élastique, dans les encoches 38.

Les vertèbres 24, qui sont immobilisées par rapport au talon 22, assurent ainsi indirectement l'immobilisation longitudinale de la raclette 12 par rapport au palonnier 42.

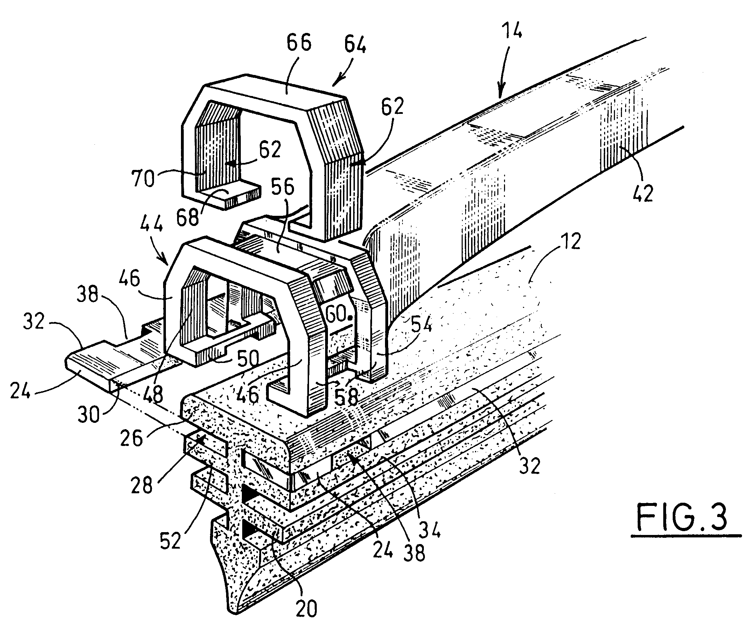

On décrira maintenant le mode de réalisation de l'invention illustré aux figures 3 à 6 sur lesquelles des composants identiques ou similaires à ceux illustrés aux figures 1 et 2 sont désignés par les mêmes chiffres de référence.

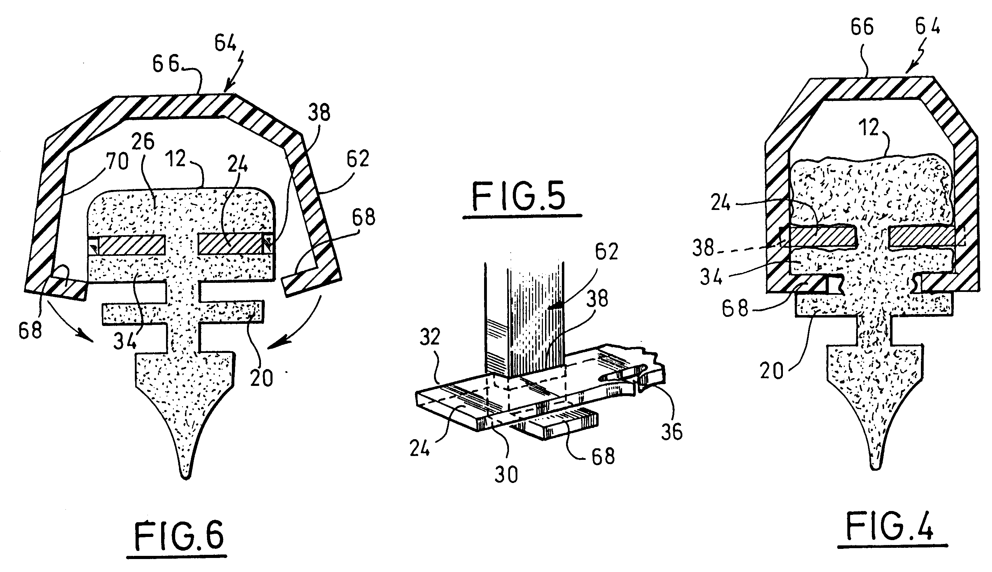

Comme on peut le constater notamment aux figures 3 et 5, le bord latéral extérieur 32 de chaque vertèbre de renfort 24 comporte ici une encoche de verrouillage 38 qui est constituée par une simple découpe de forme rectangulaire qui s'étend à l'intérieur de la vertèbre sans aucune patte de verrouillage complémentaire.

En position montée dans sa rainure correspondante 28, chaque vertèbre 24 est entièrement située dans la rainure et son bord latéral extérieur 32 affleure la surface latérale verticale 34 du corps 26 du talon 12.

La griffe 34 du palonnier 14 comporte deux branches verticales parallèles et opposées 46 dont les faces verticales parallèles internes en vis-à-vis 48 sont espacées d'une distance correspondant sensiblement à la largeur du talon supérieur de liaison 12 séparant les faces latérales verticales 34 de manière à pouvoir permettre l'introduction en coulissement libre du talon 12 dans la griffe 44.

Chacune des branches verticales 46 se prolonge, à son extrémité inférieure, par une patte transversale horizontale 50 qui est reçue en coulissement sous la face horizontale inférieure 52 du corps 26 du talon 12 de manière à assurer le guidage en coulissement du talon à l'intérieur de la griffe 44 et à retenir la raclette d'essuyage selon la direction verticale.

La griffe 44 comporte deux nervures périphériques externes et parallèles 54 qui sont reliées entre elles à la partie supérieure par une cloison horizontale formant dos 56.

Les branches verticales 58 des nervures 54 délimitent longitudinalement entre elles un logement 60 qui est ouvert latéralement vers l'extérieur et d'autre part vers l'intérieur à travers la branche verticale 48 en direction de la face latérale verticale 34 du talon 12 et du bord longitudinal 32 de la vertèbre correspondante comportant l'encoche 38.

Le logement 60 se prolonge également verticalement vers le bas dans la patte horizontale 50.

Chaque logement 60 est prévu pour recevoir un doigt vertical de verrouillage constitué par une branche verticale en forme de patte rectangulaire 62 appartenant à un cavalier de verrouillage 64.

Le cavalier de verrouillage 64 présente sensiblement la forme d'un U inversé dont les deux branches verticales 62 sont reliées par un dos horizontal 66 qui est prévu pour venir en appui contre le dos 56 de la griffe 44.

Chaque branche verticale en forme de patte de section rectangulaire 62 présente des dimensions complémentaires de celles du logement 60 et est prévue pour être reçue entre les branches verticales 58 des nervures 54.

Chaque branche de verrouillage 62 se prolonge à sa partie inférieure par une patte transversale 68 qui est prévue pour être reçue à la partie inférieure du logement 60 en-dessous de la patte 50 d'une branche verticale 46 correspondante.

En position montée du cavalier de verrouillage 64 dans laquelle il chevauche la griffe 44, chaque branche verticale de verrouillage 62 du cavalier de verrouillage 64 fait saillie transversalement vers l'intérieur au-delà de la face interne 48 de la branche correspondante 46 de la griffe 44, pour pénétrer dans l'encoche en vis-à-vis 38 formée dans le bord latéral extérieur 32 de la vertèbre dont la largeur est bien entendu supérieure à la largeur de la patte 62.

Du fait de ces dimensions, et notamment de la largeur séparant les faces internes en vis-à-vis 70 des branches verticales 62 qui est inférieure à la largeur du talon séparant ses faces latérales verticales 34, le cavalier de verrouillage 64 assure, en position montée, une compression latérale vers l'intérieur du matériau élastomère constitutif du talon comme cela est illustré sur la figure 4 de manière à permettre aux branches 62 de pénétrer dans les encoches 38.

Comme on l'a illustré sur la figure 6, la mise en place du cavalier de verrouillage 64, après avoir introduit le talon 12 par coulissement dans la griffe 44 jusqu'à ce que les trous 60 formés dans les branches 46 de cette dernière soient en regard des encoches 38, s'effectuent par déformation élastique de celui-ci en écartant les branches 62 et les pattes 60 pour l'introduire verticalement entre les nervures 54 sur la griffe 44 qu'il vient chevaucher et jusqu'à ce que, sous l'effet du rappel élastique exercé par le matériau préalablement déformé, les pattes inférieures transversales 68 viennent se positionner en-dessous des pattes transversales inférieures 50 des branches 46.

Dans le mode de réalisation illustré aux figures 3 à 6, on a indiqué que chaque vertèbre 24 comportait sur son bord latéral intérieur 30 une paire de dents 36, comme dans le cas des figures 1 et 2, de façon à assurer l'immobilisation longitudinale de la vertèbre 24 par rapport au talon supérieur 12.

Il est possible de supprimer les dents 36 si l'effort de pincement transversal exercé par les branches 62 du cavalier 64 sur le matériau déformable élastiquement du talon 12 est suffisant, le cavalier de verrouillage 64 assurant alors simultanément la solidarisation relative en position longitudinale de la griffe 44 et du talon 12 et des vertèbres 24.

Selon une autre variante de l'invention, qui n'est pas représentée sur les figures, il est également possible de prévoir dans les faces latérales 34 du talon 12, des crans ou entailles agencés longitudinalement en regard des encoches 38 et dans lesquels peuvent alors pénétrer les branches 62 du cavalier de verrouillage 64 qui assurent simultanément l'immobilisation et le positionnement longitudinal relatif précis de la griffe 44 par rapport aux vertèbres 24 et au talon 12.

Le cavalier de verrouillage 64 est réalisé dans un matériau déformable élastiquement assurant un effet de pincement, en métal ou en matière plastique, et il permet un démontage très aisé de la raclette d'essuyage 12 car il suffit de démonter le cavalier de verrouillage 64, en écartant les branches verticales 62 pour pouvoir à nouveau faire coulisser librement le talon 52 à l'intérieur de la griffe 44.

## Revendications

1. Balai d'essuie-glace, notamment de véhicule automobile, comportant une raclette d'essuyage (10) dont un talon longitudinal supérieur (12) de liaison est relié à un composant (14) d'une structure de support de la raclette d'essuyage (12) qui comporte un anneau ouvert de liaison (44) sensiblement en forme de U inversé qui chevauche le talon (12) et dont chacune des branches verticales (46) se prolonge par une patte transversale (50) qui est reçue sous une face horizontale (52) inférieure du talon (12), et du type dans lequel le talon (12) comporte au moins une rainure longitudinale (28) formée dans une face latérale verticale (34) du talon (12) et qui reçoit une vertèbre de renfort (24) réalisée sous la forme d'une plaque horizontale de renfort dont un bord latéral extérieur (32) comporte une encoche de verrouillage (38) prévue pour recevoir un organe (62) de verrouillage en position longitudinale du composant (14) de la structure de support par rapport à la vertèbre (24), caractérisé en ce que la branche verticale (46) de l'anneau de liaison (44) comporte un logement (60) qui est ouvert en direction du bord latéral extérieur (32) de la vertèbre (24) et qui reçoit un doigt vertical de l'organe de verrouillage (62) qui fait en partie saillie transversalement dans l'ouverture (60) du logement pour être reçu dans l'encoche de verrouillage (38) de la vertèbre (24).

2. Balai d'essuie-glace selon la revendication 1, caractérisé en ce que le talon supérieur de liaison (12) est réalisé en matériau déformable élastiquement, et en ce que le bord latéral extérieur (32) de la vertèbre (24) affleure la face latérale verticale (34) du talon (12).

3. Balai d'essuie-glace selon l'une des revendications 1 ou 2, caractérisé en ce que le doigt de verrouillage (62) constitue l'une des deux branches verticales d'un cavalier de verrouillage (64) en forme de U inversé qui chevauche le corps de l'anneau de liaison (44).

4. Balai d'essuie-glace selon l'une quelconque des revendications précédentes, caractérisé en ce que le talon supérieur (12) de liaison comporte deux vertèbres de renfort (24) agencées symétriquement par rapport à un plan vertical médian de symétrie de la raclette d'essuyage (12) et dont chacune (24) comporte une encoche de verrouillage (38).

5. Balai d'essuie-glace selon la revendication 4, prise en combinaison avec la revendication 3, caractérisé en ce que les encoches de verrouillage (38) des deux vertèbres de renfort (24) sont agencées longitudinalement en vis-à-vis l'une de l'autre, en ce que l'anneau de liaison (44) présente une symétrie de conception par rapport à un plan longitudinal médian, et en ce que chacune des deux branches verticales (62) du cavalier de verrouillage (64) est reçue dans un logement ouvert (60) formé dans l'une des deux branches verticales (46) de l'anneau de liaison (44).

6. Balai d'essuie-glace selon l'une des revendications 3 ou 5, caractérisé en ce que chacune des branches verticales (62) du cavalier de verrouillage (64) se prolonge par une patte transversale (38) qui est reçue sous la patte transversale (50) de la branche verticale correspondante (46) de l'anneau de liaison (44).

7. Balai d'essuie-glace selon l'une quelconque des revendications précédentes, caractérisé en ce que chaque logement ouvert (60) formé dans une branche verticale (46) de l'anneau de liaison (44) est délimité longitudinalement par deux nervures verticales externes (54,58).

8. Balai d'essuie-glace selon la revendication 7 prise en combinaison avec la revendication 6, caractérisé en ce que le cavalier de verrouillage (64) est déformable élastiquement pour permettre sa mise en place sur l'anneau de liaison (44) par écartement de ses branches verticales (62).

9. Balai d'essuie-glace selon l'une quelconque des revendications précédentes, caractérisé en ce que la face latérale verticale (34) du talon supérieur de liaison (12) comporte un cran agencé en regard de l'encoche de verrouillage (38) de la vertèbre de renfort (24) dans lequel est reçue ladite partie (62) du doigt de verrouillage qui est reçue dans l'encoche de verrouillage (38).

## Claims

1. Windscreen wiper arm, notably for motor vehicles, with a wiper blade (10) on which a top longitudinal connecting flange (12) is connected to a component (14) of a support structure for the wiper blade (12), which includes an open connecting ring (44) substantially in the form of an inverted U which straddles the flange (12) and each of whose vertical legs (46) is extended by a transverse lug (50) which is received under a bottom horizontal face (52) of the flange (12), and of the type in which the flange (12) has at least one longitudinal groove (28) formed in a vertical lateral face (34) of the flange (12) and which receives a reinforcing rib (24) produced in the form of a horizontal reinforcing plate, one outer lateral edge (32) of which has a locking notch (38) designed to receive a member (62) for locking the component (14) of the support structure in the longitudinal position with respect to the rib (24), characterised in that the vertical leg (46) of the connecting ring (44) includes a housing (60) which is open in the direction of the outer lateral edge (32) of the rib (24) and which receives a vertical finger of the locking member (62) which partially projects transversely into the opening (60) of the housing in order to be received in the locking notch (38) of the rib (24).

2. Windscreen wiper arm according to Claim 1, characterised in that the top connecting flange (12) is produced from an elastically deformable material, and in that the outer lateral edge (32) of the rib (24) is flush with the vertical lateral face (34) of the flange (12).

3. Windscreen wiper arm according to one of Claims 1 or 2, characterised in that the locking finger (62) forms one of the two vertical legs of a locking bracket (64) in the form of an inverted U, which straddles with the body of the connecting ring (44).

4. Windscreen wiper arm according to any one of the preceding claims, characterised in that the top connecting flange (12) has two reinforcing ribs (24) arranged symmetrically with respect to a vertical mid-plane of symmetry of the wiper blade (12), each (24) of which has a locking notch (38).

5. Windscreen wiper arm according to Claim 4 taken in combination with Claim 3, characterised in that the locking notches (38) of the two reinforcing ribs (24) are arranged longitudinally, facing each other, in that the connecting ring (44) has a symmetry of design with respect to a longitudinal mid-plane, and in that each of the two vertical legs (62) of the locking bracket (64) is received in an open housing (60) formed in one of the two vertical legs (46) of the connecting ring (44).

6. Windscreen wiper arm according to one of Claims 3 or 5, characterised in that each of the vertical legs (62) of the locking bracket (64) is extended by a transverse lug (38) which is received under the transverse lug (50) of the corresponding vertical leg (46) of the connecting ring (44).

7. Windscreen wiper arm according to any one of the preceding claims, characterised in that each open housing (60) formed in a vertical leg (46) of the connecting ring (44) is defined longitudinally by two outer vertical ribs (54, 58).

8. Windscreen wiper arm according to Claim 7 taken in combination with Claim 6, characterised in that the locking bracket (64) is elastically deformable, to enable it to be fitted on the connecting ring (44) by separating its vertical legs (62).

9. Windscreen wiper arm according to any one of the preceding claims, characterised in that the lateral vertical face (34) of the top connecting flange (12) has a recess arranged opposite the locking notch (38) in the reinforcing rib (24) in which the said part (62) of the locking finger which is received in the locking notch (38) is received.

## Patentansprüche

1. Scheibenwischerblatt, insbesondere für Kraftfahrzeuge, mit einem Wischergummi (10), von dem ein oberer Verbindungslängssteg (12) mit einem Bestandteil (14) einer Tragstruktur des Wischergummis (10) verbunden ist, die einen offenen Verbindungsring (44), in etwa mit der Form eines umgekehrten U, umfaßt, der den Steg (12) umgreift und dessen vertikale Schenkel (46) jeweils durch einen Queransatz (50) verlängert werden, der unter einer unteren horizontalen Fläche (52) des Stegs (12) eingreift, wobei der Steg (12) mindestens eine Längsnut (28) enthält, die in einer vertikalen Seitenfläche (34) des Stegs (12) ausgebildet ist und in die eine Versteifungsleiste (24) eingesetzt ist, die in Form einer horizontalen Versteifungsplatte ausgebildet ist, von der eine äußere Seitenkante (32) eine Verriegelungsausklinkung (38) enthält, die für die Aufnahme eines Organs (62) zur Verriegelung des Bestandteils (14) der Tragstruktur in Längsposition im Verhältnis zur Versteifungsleiste (24) vorgesehen ist, **dadurch gekennzeichnet,** daß der vertikale Schenkel (46) des Verbindungsrings (44) eine Aufnahme (60) umfaßt, die in Richtung der äußeren Seitenkante (32) der Versteifungsleiste (24) offen ist und in die ein vertikaler Finger des Verriegelungsorgans (62) eingesetzt wird, der teilweise quer in die Öffnung (60) der Aufnahme vorsteht, um in die Verriegelungsausklinkung (38) der Versteifungsleiste (24) einzugreifen.

2. Scheibenwischerblatt nach Anspruch 1, **dadurch gekennzeichnet,** daß der obere Verbindungssteg (12) aus einem elatisch verformbaren Material ausgeführt ist und daß die seitliche Außenkante (32) der Versteifungsleiste (24) bündig mit der vertikalen Seitenfläche (34) des Stegs (12) abschließt.

3. Scheibenwischerblatt nach einem der Ansprüche 1 oder 2 , **dadurch gekennzeichnet**, daß der Verriegelungsfinger (62) einen der beiden vertikalen Schenkel einer Verriegelungsklammer (64) in Form eines umgekehrten U bildet, die den Körper des Verbindungsrings (44) umgreift.

4. Scheibenwischerblatt nach einem der vorangehenden Ansprüche, **dadurch gekennzeichnet**, daß der obere Verbindungssteg (12) zwei Versteifungsleisten (24) umfaßt, die symmetrisch im Verhältnis zu einer mittleren vertikalen Symmetrieebene des Wischergummis (12) angeordnet sind und die jeweils (24) eine Verriegelungsausklinkung (38) enthalten.

5. Scheibenwischerblatt nach Anspruch 4 in Kombination mit Anspruch 3, **dadurch gekennzeichnet,** daß die Verriegelungsausklinkungen (38) der zwei Versteifungsleisten (24) in Längsrichtung einander gegenüberliegend angeordnet sind, daß der Verbindungsring (44) eine Gestaltungssymmetrie im Verhältnis zu einer Längsmittelebene aufweist und daß jeder der beiden vertikalen Schenkel (62) der Verriegelungsklammer (64) in eine offene Aufnahme (60) eingreift, die in einem der beiden vertikalen Schenkel (46) des Verbindungsrings (44) ausgebildet ist.

6. Scheibenwischerblatt nach einem der Ansprüche 3 oder 5 , **dadurch gekennzeichnet**, daß jeder der vertikalen Schenkel (62) der Verriegelungsklammer (64) durch einen Queransatz (38) verlängert wird, der unter dem Queransatz (50) des entsprechenden vertikalen Schenkels (46) des Verbindungsrings (44) eingreift.

7. Scheibenwischerblatt nach einem der vorangehenden Ansprüche, **dadurch gekennzeichnet**, daß jede in einem vertikalen Schenkel (46) des Verbindungsrings (44) ausgebildete offene Aufnahme (60) in Längsrichtung durch zwei vertikale Außenrippen (54, 58) begrenzt wird.

8. Scheibenwischerblatt nach Anspruch 7 in Kombination mit Anspruch 6**, dadurch gekennzeichnet,** daß die Verriegelungsklammer (64) elastisch verformbar ist, um ihr Einsetzen am Verbindungsring (44) durch Abspreizen ihrer vertikalen Schenkel (62) zu ermöglichen.

9. Scheibenwischerblatt nach einem der vorangehenden Ansprüche, **dadurch gekennzeichnet**, daß die vertikale Seitenfläche (34) des oberen Verbindungsstegs (12) eine gegenüber der Verriegelungsausklinkung (38) der Versteifungsleiste (24) ausgebildete Rastkerbe enthält, in die der besagte Teil (62) des Verriegelungsfingers eingesetzt ist, der in die Verriegelungsausklinkung (38) eingreift.
